# EUROPEAN PATENT APPLICATION

(11) **EP 2 722 948 A1**
(43) Date of publication of application: **23.04.2014**
(21) Application number: 12189353.1
(22) Date of filing: 19.10.2012
(51) Int. Cl.: H02G 1/10, E21B 33/038, G02B 6/50, H01R 13/523

(54) **Support apparatus for interconnected components**

(71) Applicant: SOIL MACHINE DYNAMICS LIMITED, Wallsend Tyne & Wear NE28 6UZ (GB)
(72) Inventor: The designation of the inventor has not yet been filed
(74) Representative: Vinsome, Rex Martin

(57) **Abstract**

A cable termination head (58) for bringing first (56) and second (60) components into operative connection with each other is disclosed. The cable termination head comprises a body adapted to support the first component, and first inclined surfaces (74) adapted to engage second inclined surfaces (76) of a receiver frame (54) supporting the second component, to bring the first and second components into alignment with each other and to bring the first and second components into operative connection with each other by means of the weight of the cable termination head.

## Description

The present invention relates to a support apparatus for bringing first and second components into operative connection with each other, and relates particularly, but not exclusively, to a support apparatus for supporting power cables for connection to tidal turbines.

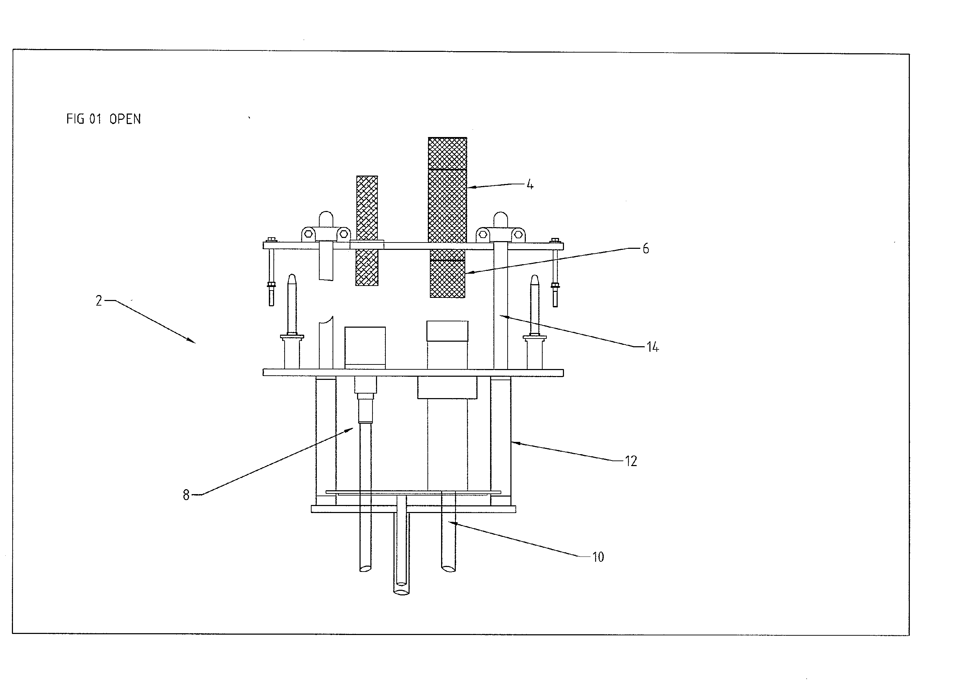

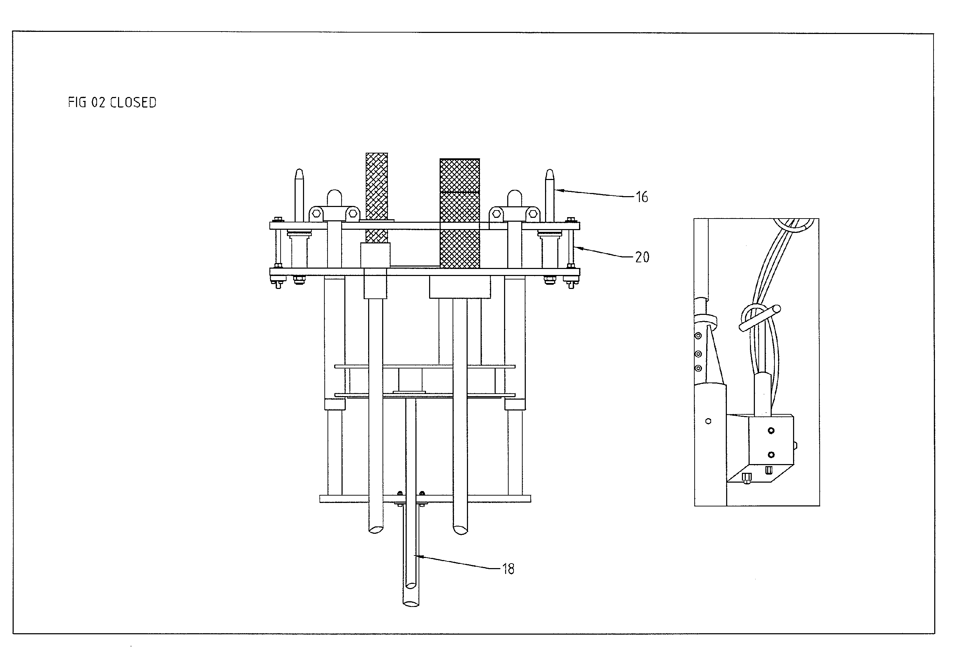

Wet mate connectors (i.e. connectors adapted to be joined together to form an electrical and/or fibre optic connection underwater) are used in underwater connection applications, such as connecting electrical power cables to tidal turbines, and to unplug the cable from the turbine for maintenance purposes. An example of one such known arrangement is shown in Figures 1 and 2. A wet mate connector 2 comprises wet mate plugs 4 attached to a mount 6 attached to a turbine (not shown), and wet mate receptacles 8 supporting a power cable 10 and attached to a sliding frame mount 12 on a cable termination head. Alignment between the plugs 4 and receptacles 8 is achieved by means of guide rails 14 and subsequently by alignment pins 16 which engage each other prior to mutual engagement of the plugs 4 and receptacles 8. The plugs 4 and receptacles 8 are locked in engagement with each other by means of a hydraulic cylinder 18 operated by means of a diver and diver operated mechanical locks 20 provide a backup to the hydraulically operated lock.

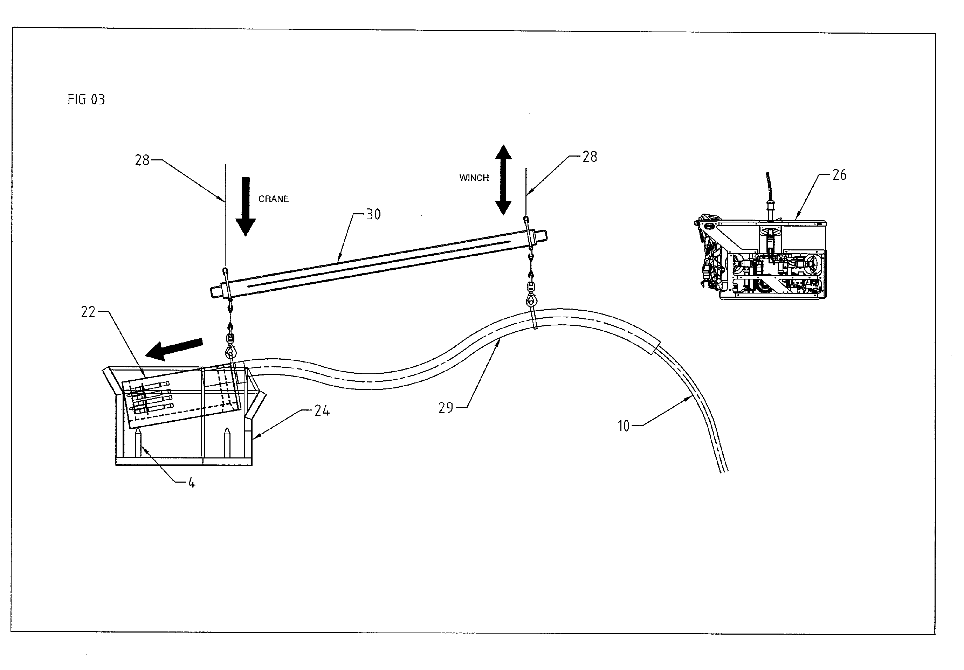

Operation of such wet mate connectors is also carried out by work class remotely operated vehicles (ROVs), which typically operate in up to 2 knots of tide. An example of a known cable installation process of a wet mate connection of Figures 1 and 2 using a ROV is shown in Figure 3. Power cable 10 having receptacles 8 is mounted to a cable termination head 22, and wet mate plugs 4 to which the cable 10 is to be connected are mounted to receiver frame 24 mounted to the turbine. In order to carry out cable connection, ROV 26 is launched to inspect the system prior to connection, and the ROV 26 is then used to connect lift cables 28 from a winch or crane (not shown) to the cable termination head 22 and a lifting beam 30. A cable protection member 29 prevents excessive bending of cable 10 and lifting beam 30 provides additional pitch control of the cable termination head. The cable termination head 22 and cable 10 are lifted and the cable termination head 22 is then lowered into the receiver frame 24. The ROV 26 is then kept on station to monitor this activity and provide instructions to the crane operator. When the cable termination head 22 is located within the receiver frame 24, the cable 10 is lowered to the seabed taking care not to damage the cable 10, and an acoustic release mechanism or the ROV 26 is then used to release the lift lines 28. The ROV 26 is then moved to the cable termination head 22 and activates the locking mechanism to secure the cable termination head 22 in the receiver frame 24. Hydraulic cylinder 18 is then activated to mate the plugs 4 and receptacles 8 to each other.

It is found that depending on the experience of the operators, the above process can typically take 3 tide cycles (i.e. about 12 hours with about 1.5 hours or less of usable time) to comfortably achieve in good conditions. However, the use of ROVs is generally problematic in that in tidal flow regions suitable for powering tidal turbines, the tide is typically only below 2 knots for very short periods, for example up to 20 minutes, 4 times per day, 8 to 10 days per month, and peak flows in tidal areas can be in excess of 10 knots. This limits the extent to which installation can be carried out, making installation costly and potentially risking damage to expensive ROVs.

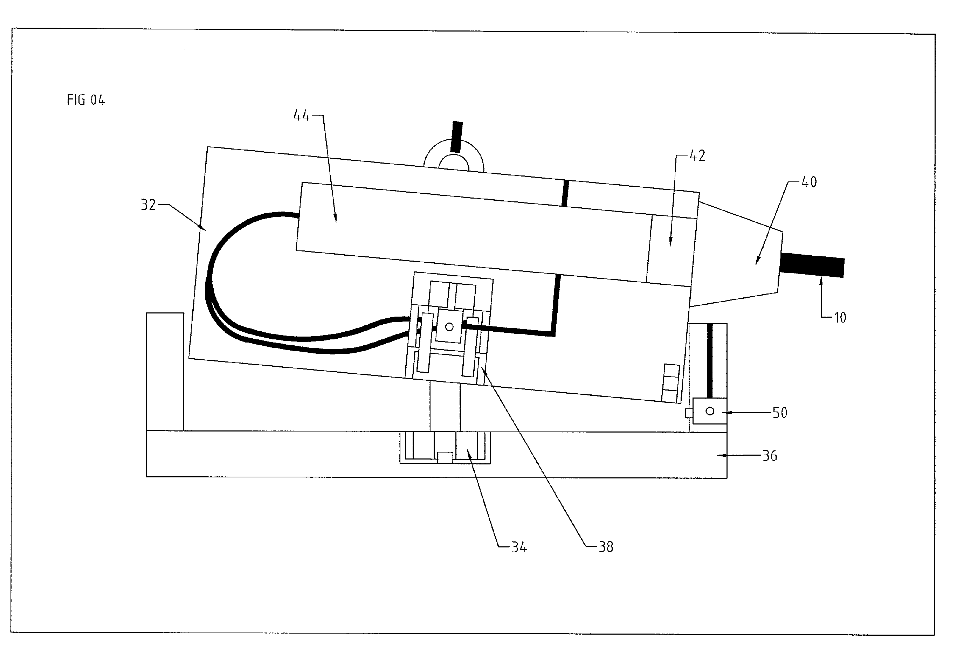

The operation of a known cable termination head 32 which seeks to minimise the use of ROVs is shown in Figures 4 to 6. Referring to Figure 4, the ROV inspects and cleans wet mate connectors 34 on receiver frame 36, and the cable termination head 32 is lowered by means of a crane and guided by the ROV into the receiver frame 36. The receiver frame 36 then coarsely aligns the wet mate stab plate assembly comprising wet mate connectors 34 on the receiver frame 36 and wet mate connectors 38 on the cable termination head 32. During this process, bending of the cable 10 is limited by bend limiter 40, the cable 10 being mounted to the cable termination head 32 from via cable termination 42 and junction box 44.

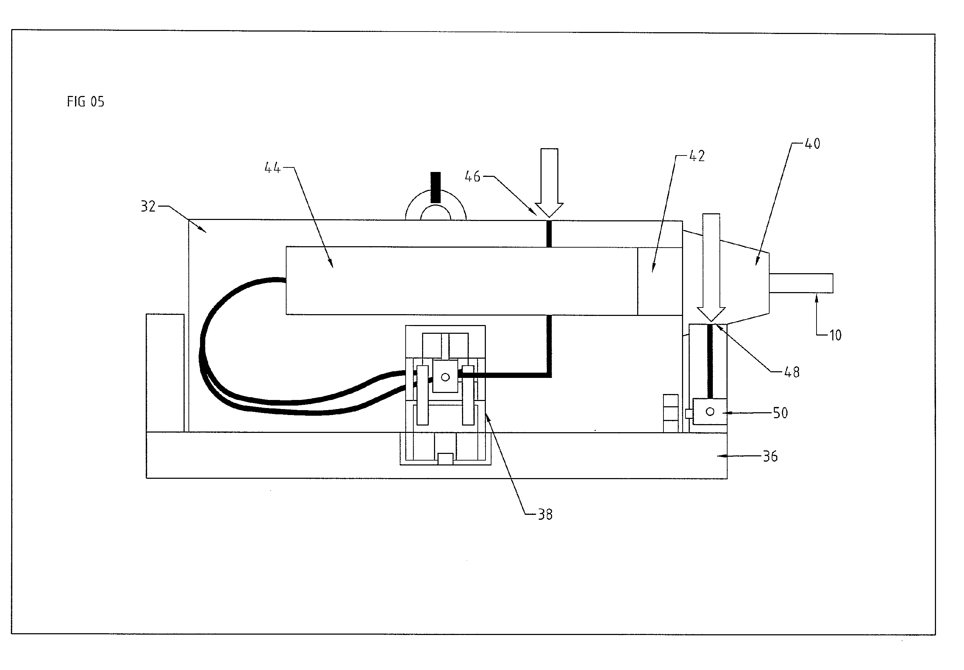

Referring to Figure 5, the ROV then connects via a hot stab 48 in the receiver frame 36 to operate and close a locking latch 50 and the ROV then connects to a hot stab 46 in the cable termination head 32 to operate and close a stab plate to bring the wet mate connectors together.

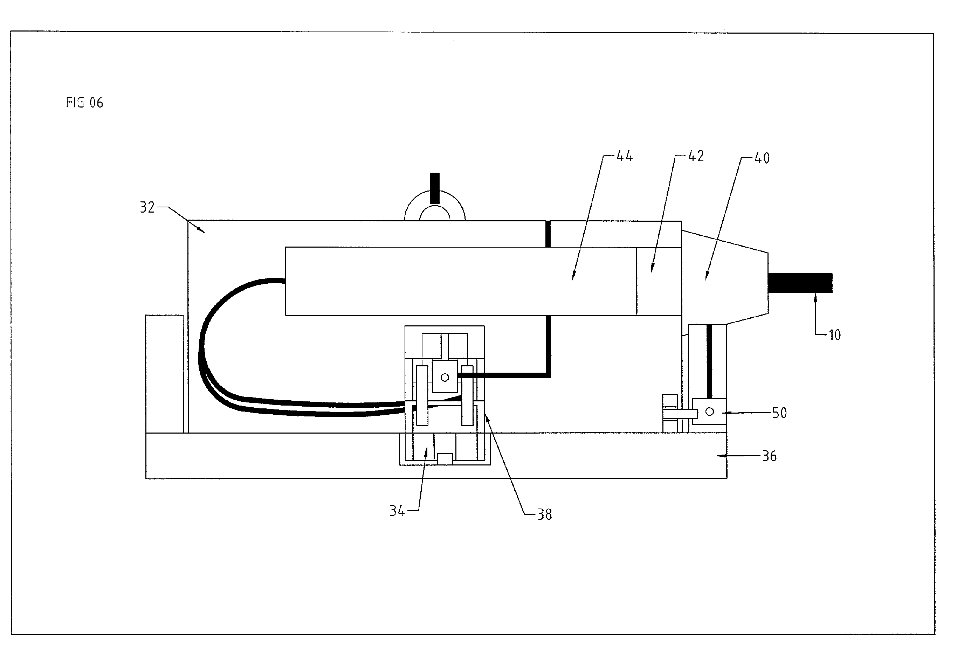

Referring to Figure 6, secondary fine alignment of the wet mates 34, 38 is then achieved by means of pins and the body of a stab plate during actuation of the assembly. The wet mate connectors may also have a degree of compliance built into their mounting configuration. This arrangement suffers from the drawback that the considerable use of ROVs limits the extent to which operations can be carried out efficiently and cost effectively.

Preferred embodiments of the present invention seek to overcome one or more of the above disadvantages of the prior art.

According to an aspect of the present invention, there is provided a first support apparatus for engaging a second support apparatus to bring first and second components into operative connection with each other, the first support apparatus comprising:-
a first body adapted to support a first component; and
first engaging means adapted to engage second engaging means of a second support apparatus supporting a second component, to bring the first and second components into a predetermined position relative to each other and to bring the first and second components into operative connection with each other by means of the weight of the first support apparatus.

By providing first engaging means adapted to engage second engaging means of a second support apparatus supporting a second component, to bring the first and second components into a predetermined position relative to each other and to bring the first and second components into operative connection with each other by means of the weight of the first support apparatus, this provides the advantage of reducing or eliminating the need to use a ROV, as a result of which cable installation processes can be carried out more efficiently and cost effectively.

The first engaging means may comprise at least one first surface inclined in use relative to the direction of relative movement of said first and second engaging means into engagement with each other.

The apparatus may further comprise third engaging means for engaging said second support apparatus to bring the first and second support apparatus into a predetermined position relative to each other prior to engagement of said first and second engaging means with each other.

This provides the advantage of enabling coarse alignment to be carried out prior to fine alignment, thereby reducing the forces on the components carrying out fine alignment.

The apparatus may further comprise damping means for resisting motion of said first component into engagement with said second component.

This provides the advantage of minimising the risk of damage to the apparatus and in particular the wet mate connectors.

The damping means may include at least one piston.

Part of the weight of the first support apparatus may be adapted to be added prior to bringing the first and second components into operative connection with each other and/or removed subsequently to bringing the first and second components into operative connection with each other.

This provides the advantage of reducing the weight and cost of the first apparatus which needs to remain permanently installed.

According to another aspect of the present invention, there is provided a support assembly comprising:-
a first support apparatus as defined above; and
a second support apparatus adapted to support a second component, and having second engaging means for engaging said first engaging means.

The second engaging means may comprise at least one second surface inclined in use relative to the direction of relative movement of said first and second engaging means into engagement with each other.

The assembly may further comprise latching means for retaining said first support apparatus in engagement with said second support apparatus.

The latching means may be adapted to be activated by means of the weight of said first support apparatus.

According to a further aspect of the present invention, there is provided a component interconnection assembly comprising:-
a support assembly as defined above;
at least one first component adapted to be supported by said first support apparatus; and
at least one second component adapted to be supported by said second support apparatus.

At least one said first and second component may be adapted to transmit electrical power.

At least one said first and second component may be adapted to transmit optical signals.

At least one said first and second component may be adapted to transmit hydraulic pressure

A preferred embodiment of the invention will now be described, by way of example only and not in any limitative sense, with reference to the accompanying drawings, in which:-
Figure 1 is a schematic view of a known wet mate connector in an open condition;
Figure 2 is a schematic view of the connector of Figure 1 in a closed condition;
Figure 3 is schematic illustration of an installation process of the connector of Figures 1 and 2;
Figures 4 to 6 are a schematic illustration of an installation process of a further known connector;
Figures 7 to 9 are a schematic illustration of installation of a connector of a first embodiment of the present invention; and
Figures 10 to 12 are a schematic illustration of installation of a connector of a second embodiment of the present invention.

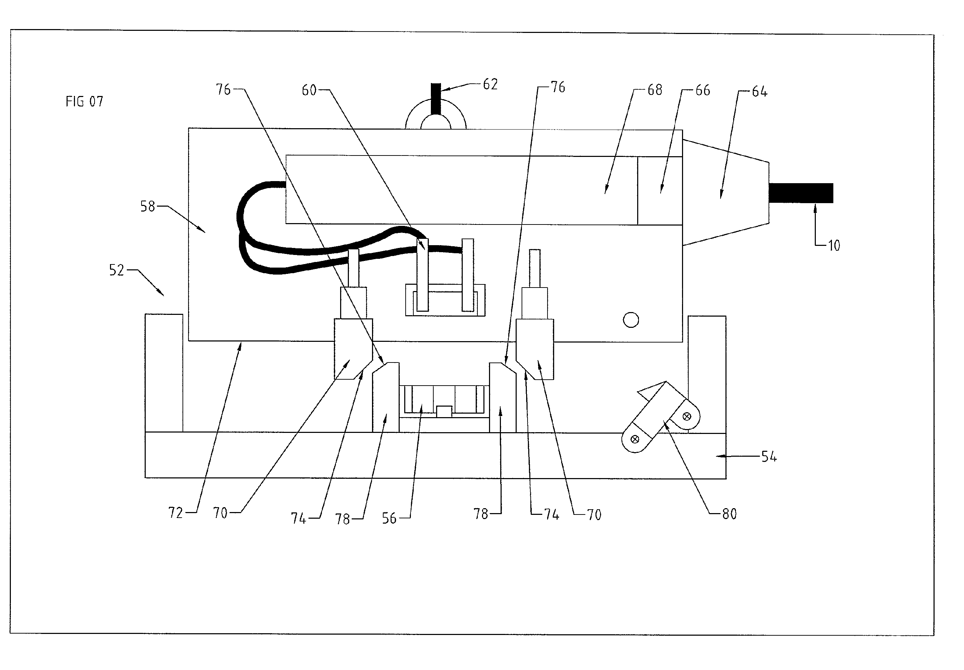

Referring to Figure 7, a connector assembly 52 of a first embodiment of the present invention for use in connecting a power cable 10 to the tidal turbine of Figure 3 has a receiver frame 54 attached to the turbine and having a first component 56 of a wet mate connector attached thereto, and a cable termination head 58 supporting a second component 60 of the wet mate connector and adapted to be located in position in the receiver frame 54 by means of a lift cable 62 attached to a crane (not shown). A bend limiter 64 prevents excessive bending of the cable 10 which is connected via cable termination 66 and junction box 68 to the second component 60 of the connector.

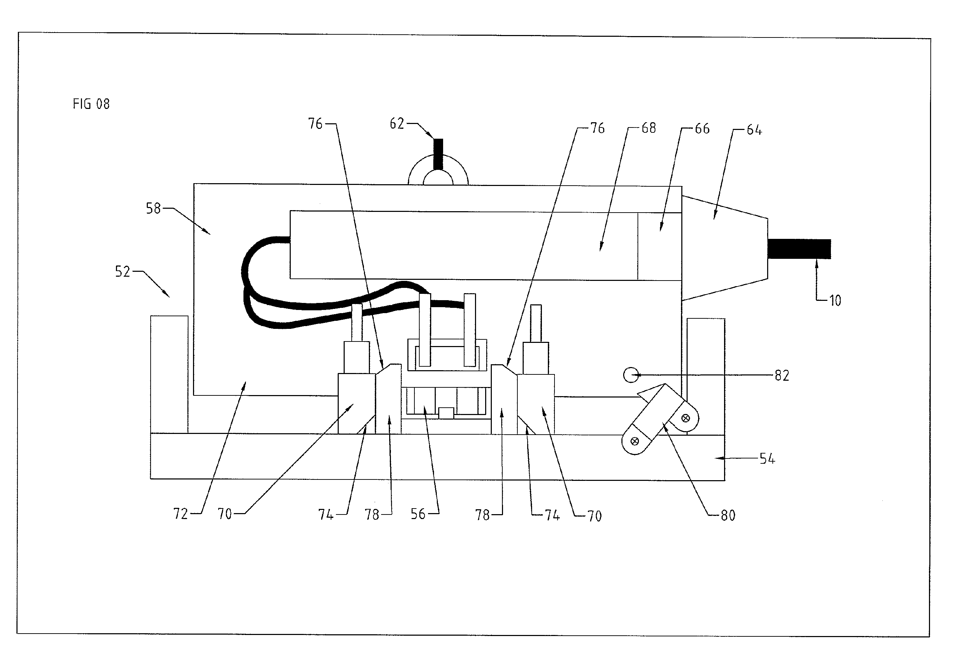

Dampers in the form of retractable pistons 70 are mounted to guides extending from a lower surface 72 of the cable termination head 58, and the lower parts of the pistons 70 are provided with first inclined surfaces 74 for engaging second inclined surfaces 76 on locating members 78 provided on the receiver frame 54. In order to bring the first 56 and second 60 components into connection with each other, coarse alignment is achieved by locating the cable termination head 58 in the receiver frame 54. As the cable termination head 58 is lowered, the first inclined surfaces 74 of pistons 70 engage the second inclined surfaces 76 on the receiver frame 54 to bring the first 56 and second 60 components into closer alignment with each other, as shown in Figure 8.

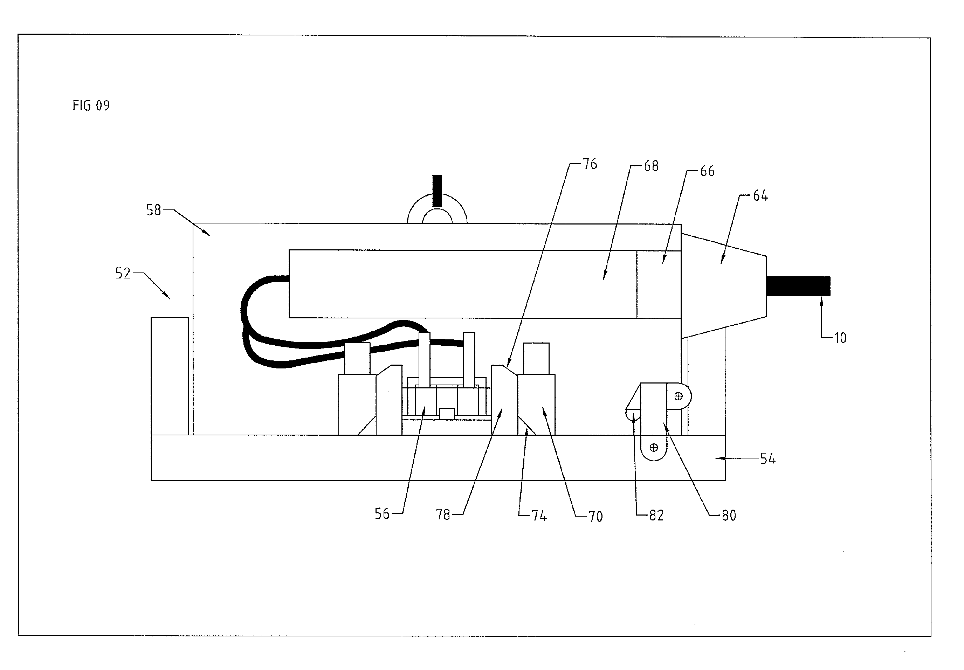

Finer alignment is then achieved by means of a heavy duty docking probe 78 or fine alignment pins, and as the first 56 and second 60 components are brought into engagement with each other, the weight of the cable termination head 58 forces the pistons 70 into the lower surface 72 of cable termination head 58, causing the first 56 and second 60 components to connect with each other. At the same time, the downward movement of the cable termination head 58 pushes an automatic latch 80 aside, which then latches into position against an engagement 82, to maintain the cable termination head 58 in position on the receiver frame 54, as shown in Figure 9.

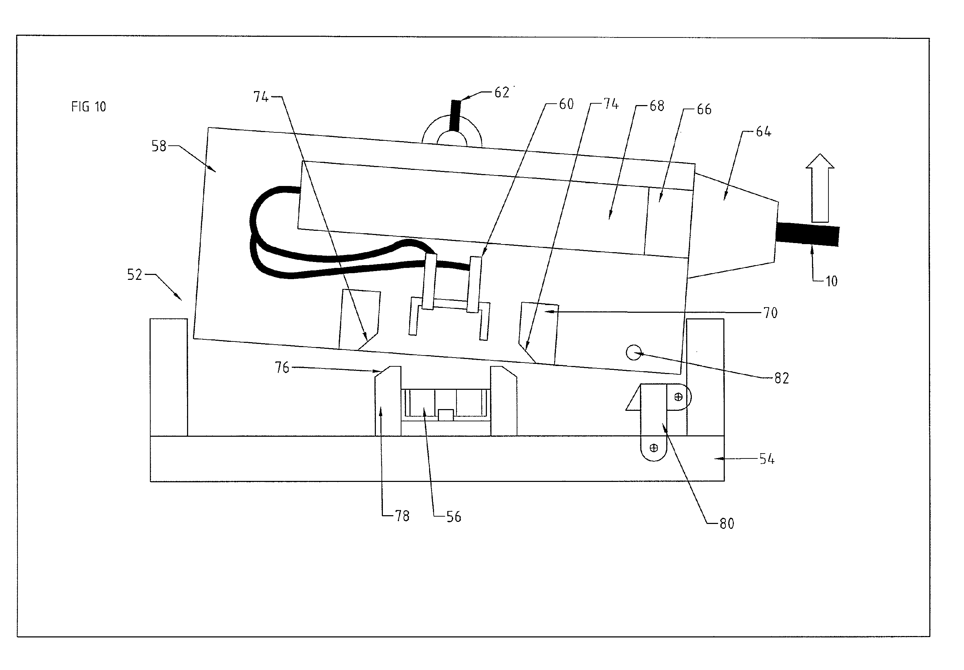

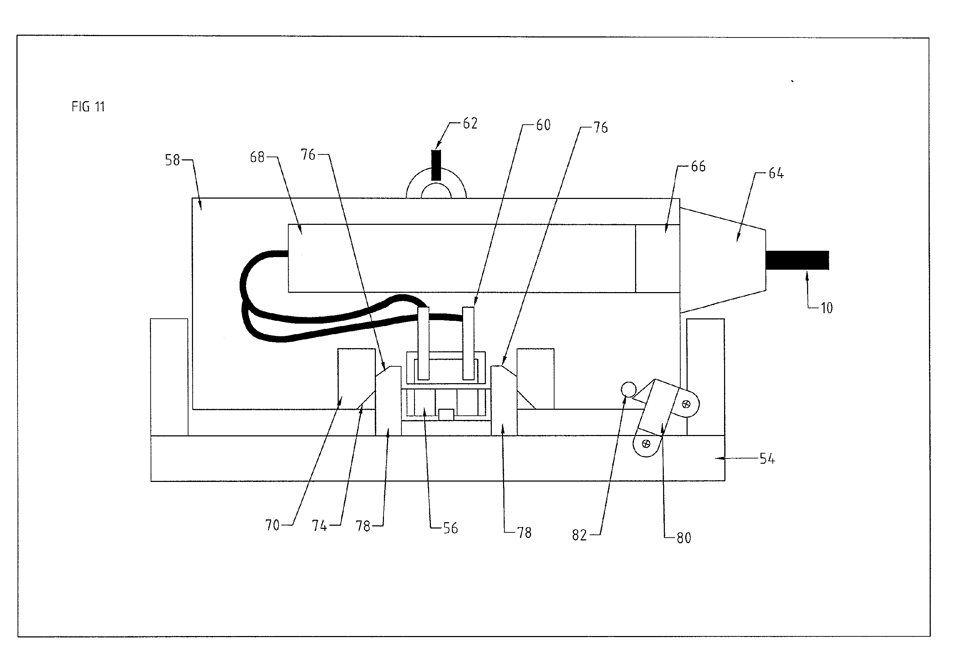

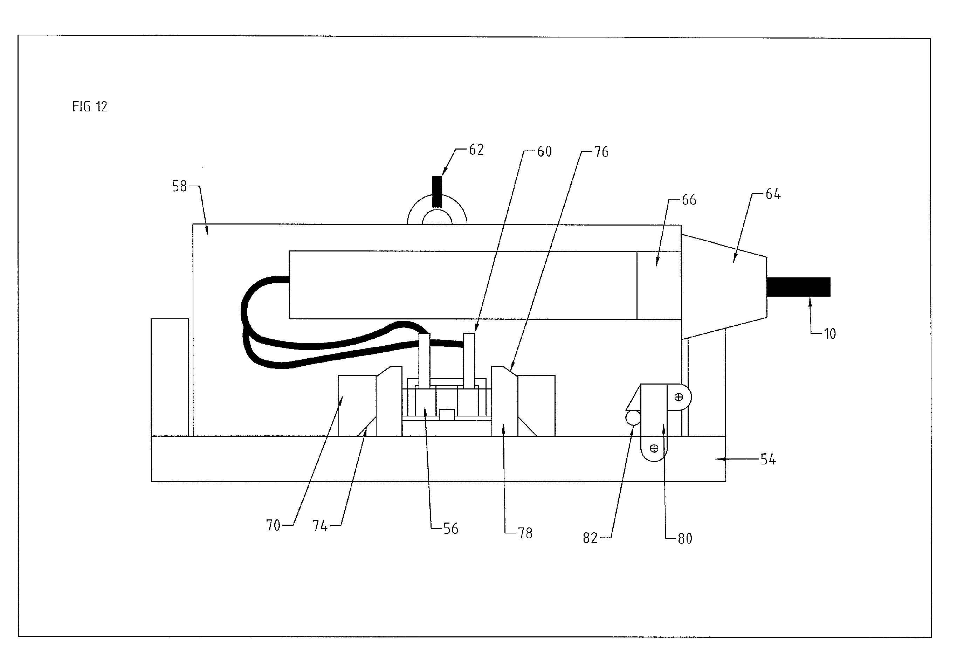

Referring to Figures 10 to 12, an arrangement of a second embodiment of the present invention operates in a similar manner to the first embodiment, but dampers are not provided. In the arrangement of Figures 10 to 12, coarse alignment is achieved by locating the cable termination head in the receiver frame, as in the first embodiment, and finer alignment is then achieved by means of a heavy duty docking probe. Similarly, the automatic latch is pushed aside and finer alignment is then achieved by means of a lateral float in the wet mate connectors and the mounting plate.

It will be appreciated by persons skilled in the art that the above embodiments have been described by way of example only, and not in any limitative sense, and that various alterations and modifications are possible without departure from the scope of the invention as defined by the appended claims. For example, the invention can be used in connection with applications other than tidal energy conversion devices, such as wave power operated apparatus, oil and gas, or mining applications.

## Claims

1. A first support apparatus for engaging a second support apparatus to bring first and second components into operative connection with each other, the first support apparatus comprising:-
a first body adapted to support a first component; and
first engaging means adapted to engage second engaging means of a second support apparatus supporting a second component, to bring the first and second components into a predetermined position relative to each other and to bring the first and second components into operative connection with each other by means of the weight of the first support apparatus.

2. An apparatus according to claim 1, wherein the first engaging means comprises at least one first surface inclined in use relative to the direction of relative movement of said first and second engaging means into engagement with each other.

3. An apparatus according to claim 1 or 2, further comprising third engaging means for engaging said second support apparatus to bring the first and second support apparatus into a predetermined position relative to each other prior to engagement of said first and second engaging means with each other.

4. An apparatus according to any one of the preceding claims, further comprising damping means for resisting motion of said first component into engagement with said second component.

5. An apparatus according to claim 4, wherein the damping means comprises at least one piston.

6. An apparatus according to any one of the preceding claims, wherein part of the weight of the first support apparatus is adapted to be added prior to bringing the first and second components into operative connection with each other and/or removed subsequently to bringing the first and second components into operative connection with each other.

7. A support assembly comprising:-
a first support apparatus according to any one of the preceding claims; and
a second support apparatus adapted to support a second component, and having second engaging means for engaging said first engaging means.

8. An assembly according to claim 7, wherein the second engaging means comprises at least one second surface inclined in use relative to the direction of relative movement of said first and second engaging means into engagement with each other.

9. An assembly according to claim 7 or 8, further comprising latching means for retaining said first support apparatus in engagement with said second support apparatus.

10. An assembly according to claim 9, wherein the latching means is adapted to be activated by means of the weight of said first support apparatus.

11. A component interconnection assembly comprising:-
a support assembly according to any one of claims 7 to 10;
at least one first component adapted to be supported by said first support apparatus; and
at least one second component adapted to be supported by said second support apparatus.

12. An assembly according to claim 11, wherein at least one said first and second component are adapted to transmit electrical power.

13. An assembly according to claim 11 or 12, wherein at least one said first and second component are adapted to transmit optical signals.

14. An assembly according to any one of claims 11 to 13, wherein at least one said first and second component are adapted to transmit hydraulic pressure.
